# EUROPEAN PATENT APPLICATION

(11) **EP 4 773 521 A1**
(43) Date of publication of application: **08.07.2026**
(21) Application number: 24869631.2
(22) Date of filing: 25.03.2024
(51) Int. Cl.: H04B 10/071, H04B 10/25

(54) **CABLE LOCATING METHOD FOR COMMUNICATION OPTICAL CABLE, AND ELECTRONIC DEVICE AND COMPUTER-READABLE STORAGE MEDIUM**

(30) Priority: 27.09.2023 CN 202311261861
(71) Applicant: ZTE CORPORATION, Shenzhen, Guangdong 518057 (CN)
(72) Inventor: ZHAO, Yan, Shenzhen, Guangdong 518057 (CN); SHI, Hu, Shenzhen, Guangdong 518057 (CN); LI, Yiqi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/083529
(87) International publication number: WO 2025/066060

(57) **Abstract**

The present application discloses a cable locating method for a communication optical cable, an electronic device, and a computer-readable storage medium, belonging to the technical field of communication. The technical solution of the present application includes: in response to applying a preset disturbance stress to an optical cable location to be detected, dynamically detecting polarization state information of a probe light currently transmitted by a target optical cable using a brillouin optical time domain reflectometer connected to the target optical cable; and determining whether an optical cable to be identified at the optical cable location to be detected is the target optical cable according to the dynamically detected polarization state information.

## Description

### CROSS-REFERENCE TO RELATED APPLICATIONS

This application claims priority to Chinese Patent Application No. 202311261861.0, filed on September 27, 2023. The disclosure of the above-mentioned application is incorporated herein by reference in its entirety.

### TECHNICAL FIELD

The present application relates to the technical field of communication, and more particularly to a cable locating method for a communication optical cable, an electronic device, and a computer-readable storage medium.

### BACKGROUND

Fiber optic communication networks are constantly being built and expanded. The large number of optical cables presents significant challenges to operation and maintenance. Accurately locating the corresponding optical cables is crucial for network upgrades, cutovers, optical cable fault location, and route verification. However, optical cable resource information relies on manual entry, which is unreliable and results in low accuracy of asset management data. Meanwhile, due to municipal construction and natural environmental corrosion, the identification signs used during optical cable laying are difficult to identify. Furthermore, multiple operators share ducts and manholes, resulting in a highly complex distribution of optical cables in the existing network. Therefore, a high-precision cable locating method is urgently needed.

### SUMMARY

The main purpose of the present application is to provide a cable locating method for a communication optical cable, an electronic device, and a computer-readable storage medium, aiming to solve the technical problem of improving the accuracy of optical cable locating without damaging the optical cable.

To achieve the above purpose, the present application provides a cable locating method for a communication optical cable, including: in response to applying a preset disturbance stress to an optical cable location to be detected, dynamically detecting polarization state information of a probe light currently transmitted by a target optical cable using a brillouin optical time domain reflectometer connected to the target optical cable; and determining whether an optical cable to be identified at the optical cable location to be detected is the target optical cable according to the dynamically detected polarization state information.

To achieve the above purpose, the present application provides a cable locating method for a communication optical cable, including: in response to applying a preset disturbance stress to an optical cable location to be detected, dynamically detecting polarization state information of a probe light currently transmitted by a target optical cable using a polarization optical time domain reflectometer connected to the target optical cable; and determining whether an optical cable to be identified at the optical cable location to be detected is the target optical cable according to the dynamically detected polarization state information.

To achieve the above purpose, the present application provides a cable locating method for a communication optical cable, including: in response to applying a preset disturbance stress to an optical cable location to be detected, dynamically detecting polarization state information of a probe light currently transmitted by a target optical cable using an optical digital signal processing of a coherent optical module connected to the target optical cable; and determining whether an optical cable to be identified at the optical cable location to be detected is the target optical cable according to the dynamically detected polarization state information.

In addition, to achieve the above purposes, the present application also provides an electronic device, including: a memory, a processor, and a cable locating program for a communication optical cable stored in the memory and executable on the processor, the cable locating program for the communication optical cable implements the cable locating method for the communication optical cable as described above when executed by the processor.

In addition, to achieve the above purposes, the present application also provides a computer-readable storage medium, the computer-readable storage medium stores a cable locating program for a communication optical cable, and the cable locating program for a communication optical cable implements the cable locating method for the communication optical cable as described above when executed by a processor.

### BRIEF DESCRIPTION OF THE DRAWINGS

The accompanying drawings, incorporated in and forming part of the specification, illustrate embodiments consistent with the present application and, together with the description, serve to explain the principles of the present application.

To more clearly illustrate the technical solutions in this embodiment or the prior art, the accompanying drawings used in the description of the embodiment or the prior art will be briefly introduced below. Obviously, those skilled in the art can obtain other drawings based on these accompanying drawings without any creative effort.
FIG. 1 is a flowchart illustrating a cable locating method for a communication optical cable of a first embodiment of the present application.
FIG. 2 is a flowchart illustrating a cable locating method for a communication optical cable of a second embodiment of the present application.
FIG. 3 is a flowchart illustrating a cable locating method for a communication optical cable of a third embodiment of the present application.
FIG. 4 is a flowchart illustrating a cable locating process for a communication optical cable in a specific embodiment of the present application.
FIG. 5 is a schematic diagram illustrating a cable locating scenario for a communication optical cable in the first embodiment of the present application.
FIG. 6 is a schematic diagram illustrating a cable locating scenario for a communication optical cable in the second embodiment of the present application.
FIG. 7 is a schematic diagram illustrating a cable locating scenario for a communication optical cable in the third embodiment of the present application.
FIG. 8 is a schematic diagram illustrating a cable locating scenario for a communication optical cable in a fourth embodiment of the present application.
FIG. 9 is a schematic diagram illustrating a cable locating scenario for a communication optical cable in a fifth embodiment of the present application.
FIG. 10 is a schematic diagram illustrating a cable locating scenario for a communication optical cable in a sixth embodiment of the present application.
FIG. 11 is a schematic diagram of a network management application display interface displaying a dynamic polarization state image in an embodiment of the present application.
FIG. 12 is a schematic diagram of a device structure of a hardware operating environment involved in an electronic device in this embodiment.

The purposes, functional features, and advantages of the present application will be further explained in conjunction with the embodiments and with reference to the accompanying drawings.

### DETAILED DESCRIPTION OF THE EMBODIMENTS

In order to make the purpose, technical solutions and advantages of the present application clearer, the technical solutions in the embodiments of the present application will be clearly and completely described below in conjunction with the accompanying drawings in the embodiments of the present application. Obviously, the described embodiments are only some of the embodiments of the present application, but not all of the embodiments. Based on the embodiments of the present application, all other embodiments obtained by those skilled in the art without any creative work fall within the scope of the present application.

The large number of optical cables presents significant challenges to operation and maintenance. Accurately locating the corresponding optical cables is crucial for network upgrades, cutovers, optical cable fault location, and route verification. However, optical cable resource information relies on manual entry, which is unreliable and results in low accuracy of asset management data. Meanwhile, due to municipal construction and natural environmental corrosion, the identification signs used during optical cable laying are difficult to identify. Furthermore, multiple operators share ducts and manholes, resulting in a highly complex distribution of optical cables in the existing network. Therefore, a high-precision cable locating method is urgently needed.

Fiber optic cable location has always been a challenge in optical cable maintenance. Currently, there are two main methods for locating optical cables: The first method involves shining a red light on one end of the optical cable, stripping the protective layer at the test point, bending the fiber core, and observing whether red light appears at the bend to identify the target optical cable. This method has a short detection distance and requires damaging the optical cable, posing a significant safety hazard to operating services. Furthermore, the accuracy of cable-finding positioning is not high. The second method involves shining light on one end of the optical cable using an optical time-domain reflectometer, OTDR, bending the optical cable significantly at the test point to create a large attenuation point, and then observing the OTDR detection curve to identify the target optical cable. Although this method has a longer detection distance, its accuracy is not high, and it can cause irreversible damage to the optical cable, affecting its service life.

### First Embodiment

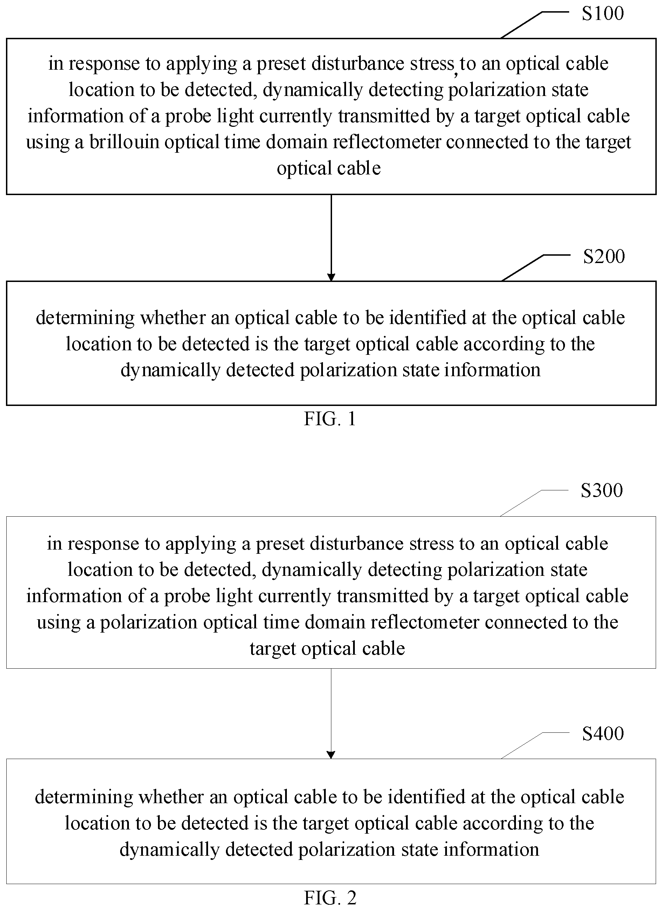

Based on this, referring to FIG. 1, the embodiment provides a cable locating method for a communication optical cable. The method includes:
Step S100, in response to applying a preset disturbance stress to an optical cable location to be detected, dynamically detecting polarization state information of a probe light currently transmitted by a target optical cable using a brillouin optical time domain reflectometer connected to the target optical cable. In this embodiment, the optical cable location to be detected refers to a preset optical cable detection position on the optical cable to be identified. Those skilled in the art can apply the preset disturbance stress to the optical cable location to be detected using mechanical tools (e.g., a stress application tool including an optical cable clamp and a vibration generator) or manually. The preset disturbance stress refers to the stress value applied within a preset duration that will undergo a preset change.

As those skilled in the art will know, the basic principle of a brillouin optical time domain reflectometer is that the continuous elastic vibration of the medium inside the optical fiber causes the medium density to change periodically with space and time. The refractive index of the medium is periodically modulated and propagates at the speed of sound, producing a grating-like effect. When a light wave is incident on the optical fiber, it is subjected to the effect of the acoustic grating, resulting in a frequency shift related to the speed of sound. This frequency shift changes approximately linearly with the change in temperature and strain of the optical fiber. In other words, based on the basic principle of optical time-domain reflectometry, as a light pulse propagates forward along the optical fiber, it continuously generates backscattered Brillouin light. This backscattered Brillouin light can be used to locate the strain information at various points along the optical fiber.

This embodiment utilizes phase demodulation technology of the Brillouin scattered light to achieve rapid measurement of the Brillouin frequency, thereby demodulating the stress-related information (i.e., polarization state information) of the optical fiber.

Generally, because the power of the Brillouin scattered light received by the system is very weak and its frequency is close to that of the Rayleigh scattered light, coherent detection technology is required to extract the Brillouin scattered light.

Step S200, determining whether an optical cable to be identified at the optical cable location to be detected is the target optical cable according to the dynamically detected polarization state information.

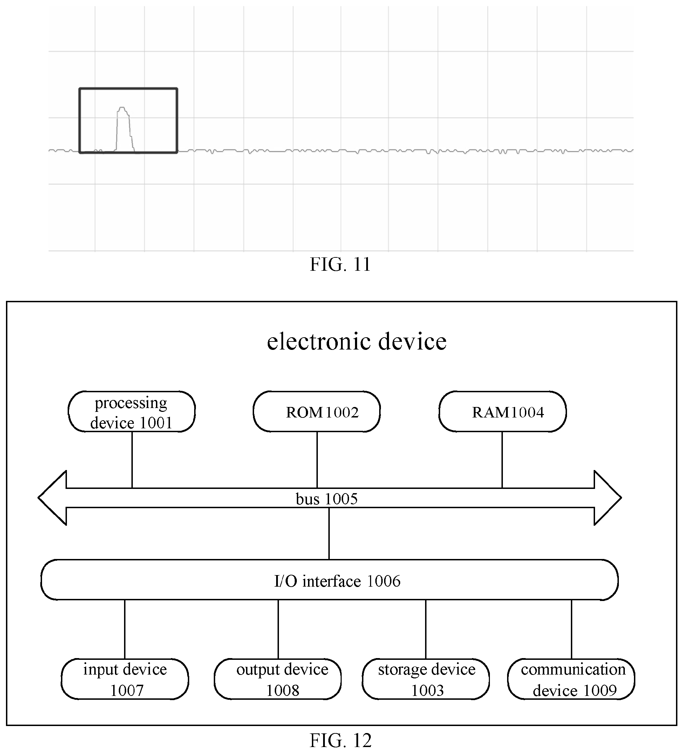

As those skilled in the art will know, the dynamically detected polarization state information can be used to reflect the stress change information at various points along the optical fiber. This is because the refractive index of the optical fiber changes with external stress. When high coherence light is used for detection, the phase of the reflected light at each point of the optical fiber changes with the stress value. The corresponding change in the reflected light phase is proportional to the magnitude of the stress change in the optical fiber. Therefore, the target optical cable can be analyzed for whether it is subjected to a preset disturbance stress by detecting the change in the reflected light phase. As shown in FIG. 11, the polarization state waveform displayed within the rectangular frame of FIG. 11 represents the polarization state information generated by a preset disturbance stress.

Exemplary, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

This embodiment utilizes sensing devices such as brillouin optical time domain reflectometer, BOTDR at various sites in the optical network for cable locating. In the inductive simultaneous transmission mode, the probe light transmitted and received by the optical module can achieve inductive simultaneous transmission with the service light. For standard single-mode optical fiber, inductive simultaneous transmission can be achieved by wavelength division multiplexing. For few-mode/multimode optical fiber, inductive simultaneous transmission can be achieved by mode division multiplexing. For multi-core optical fiber, inductive simultaneous transmission can be achieved by mode division multiplexing/core multiplexing. In the non-inductive simultaneous transmission mode, the BOTDR need to be connected to any optical fiber of the target optical cable in the equipment room/site.

In this embodiment, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable, thereby ensuring that the normal transmission of the service light is not affected during cable locating of the target optical cable, thus preserving the normal operation of user services and improving the robustness of the cable locating method for the communication optical cable in this embodiment.

The location principle for cable locating of the communication optical cable provided in the present application embodiment is as follows: when the optical cable winding reels in the optical fiber well are tangled together and the target optical cable cannot be identified, a preset disturbance stress can be applied at the preset optical cable detection position (i.e., the optical cable location to be detected) of the optical cable to be identified based on mechanical tools or manually; then, dynamically detecting polarization state information of a probe light currently transmitted by a target optical cable using a Brillouin optical time-domain reflectometer connected to the target optical cable. When the optical cable to be identified is not the target optical cable, the detected polarization state information is equivalent to that caused by the contact point between the optical cable to be identified and the target optical cable. Therefore, when the optical cable to be identified and the target optical cable are not the same optical cable, the detected polarization state information is relatively stable (it will not produce a certain degree of frequency change). When the optical cable to be identified and the target optical cable are the same optical cable, the polarization state information will produce a frequency deviation of a certain magnitude due to the preset disturbance stress on the optical fiber.

The present application relates to the field of transmission network communication, and particularly to the cable locating and positioning technology of communication optical cables during the network operation and maintenance phase of Optical Transport Network, OTN.

At external optical fiber wells, when external stress, generated mechanically or manually, is applied to the target optical cable, the brillouin optical time domain reflectometer, BOTDR can detect changes in polarization state or frequency deviation caused by external stress. Specifically, when external stress is applied to a non-target optical cable, the BOTDR connected to the target optical cable will not detect any changes in polarization state or frequency deviation. Furthermore, the BOTDR can locate the target optical cable and report this location information to the asset management and maintenance system. Maintenance personnel can then use this multi-point location information to determine the consistency between service routes and planned routes, and to identify potential routing inconsistencies within the network.

The present application proposes a cable locating method for a communication optical cable, an electronic device, and a computer-readable storage medium. In this cable locating method for the communication optical cable, the technical solution of the present application involves that: in response to applying a preset disturbance stress to an optical cable location to be detected, dynamically detecting polarization state information of a probe light currently transmitted by a target optical cable using a Brillouin optical time-domain reflectometer connected to the target optical cable; and then, determining whether an optical cable to be identified at the optical cable location to be detected is the target optical cable according to the dynamically detected polarization state information.

Compared to current optical cable-finding positioning methods, this embodiment eliminates the need to strip the protective layer of the optical cable or bend the fiber core at the test point (i.e., the optical cable location to be detected), thus avoiding damage to the optical cable. Furthermore, this embodiment utilizes a brillouin optical time domain reflectometer, BOTDR to monitor the high-precision monitoring mechanism of the probe light, combining with inductive simultaneous transmission method or non-inductive simultaneous transmission method to monitor changes in polarization state or frequency deviation caused by external stress (the external stress can be applied mechanically or manually). This allows for more accurate location of the target optical cable, improving the accuracy of cable locating for optical cables, facilitating precise location of target optical cables in complex network environments and enabling target optical cable positioning. Moreover, it can further combine multi-point location information to achieve route identification for the target optical cable, providing accurate optical cable information for fault location, maintenance, and splicing.

In one implementable method, the determining whether the optical cable to be identified at the optical cable location to be detected is the target optical cable according to the dynamically detected polarization state information includes:
Step A10, converting the dynamically detected polarization state information into a dynamic polarization state image; and
Step A20, outputting and displaying the dynamic polarization state image by a preset network management application display interface, the dynamic polarization state image is configured to indicate whether the optical cable to be identified at the optical cable location to be detected is the target optical cable.

Those skilled in the art will understand that the polarization state information refers to a polarization state signal (e.g., a digital signal) detected by a brillouin optical time domain reflectometer. Furthermore, the dynamic polarization state image can refer to the dynamic waveform image corresponding to the dynamically changing polarization state information (since the polarization state information often changes in real time, the dynamic waveform image also changes in real time).

To facilitate a more intuitive determination of whether the optical cable to be identified, currently undergoing disturbance stress detection, is the target optical cable, this embodiment converts the dynamically detected polarization state information into a dynamic polarization state image (e.g., this dynamic polarization state image includes the real-time detected polarization state image). Then, the dynamic polarization state image is output and displayed by a preset network management application display interface, thereby allowing for direct visual observation of the dynamic polarization state image, and accurately determining whether the optical cable to be identified is the target optical cable.

In another feasible embodiment, the determining whether the optical cable to be identified at the optical cable location to be detected is the target optical cable according to the dynamically detected polarization state information includes:
Step B10, identifying frequency deviation fluctuation information within a current preset monitoring period according to the dynamically detected polarization state information;
Step B20, in response to that a frequency deviation variation value corresponding to the frequency deviation fluctuation information is greater than a preset threshold, determining that the optical cable to be identified at the optical cable location to be detected is the target optical cable; and
Step B30, in response to that the frequency deviation variation value corresponding to the frequency deviation fluctuation information is not greater than the preset threshold, determining that the optical cable to be identified at the optical cable location to be detected is not the target optical cable.

In this embodiment, the duration of the preset monitoring period is not specifically limited; those skilled in the art can set it according to actual conditions. Correspondingly, the preset threshold is also not specifically limited in this embodiment; those skilled in the art can set it according to actual conditions to more accurately and sensitively determine whether the optical cable to be identified is the same as the target optical cable.

In this embodiment, by identifying frequency deviation fluctuation information within a current preset monitoring period according to the dynamically detected polarization state information; in response to that a frequency deviation variation value corresponding to the frequency deviation fluctuation information is greater than a preset threshold, determining that the optical cable to be identified at the optical cable location to be detected is the target optical cable; and in response to that the frequency deviation variation value corresponding to the frequency deviation fluctuation information is not greater than the preset threshold, determining that the optical cable to be identified at the optical cable location to be detected is not the target optical cable, thereby accurately determining whether the optical cable to be identified is the target optical cable.

In another possible implementation, the determining whether the optical cable to be identified at the optical cable location to be detected is the target optical cable according to the dynamically detected polarization state information includes:
Step C10, converting the dynamically detected polarization state information into a dynamic polarization state image;
Step C20, outputting and displaying the dynamic polarization state image by a preset network management application display interface; and
Step C30, collecting the dynamic polarization state image displayed on the network management application display interface, performing image recognition processing on the collected dynamic polarization state image, and identifying whether the optical cable to be identified at the optical cable location to be detected is the target optical cable.

In this embodiment, the dynamic polarization state image displayed on the network management application display interface can be captured by a camera, or the dynamic polarization state image displayed on the network management application display interface can be captured by an image acquisition device built into the network management device.

It is easy to understand that this dynamic polarization state image carries indicative information indicating whether the optical cable to be identified at the optical cable location to be detected is the target optical cable.

Specifically, as an embodiment, the performing image recognition processing on the collected dynamic polarization state image, and identifying whether the optical cable to be identified at the optical cable location to be detected is the target optical cable includes:
Step D10, performing image recognition processing on the collected dynamic polarization state image, and identifying the actual frequency deviation waveform within the current preset monitoring period;
Step D20, matching the actual frequency deviation waveform with a preset frequency deviation waveform template;
Step D30, in response to that a matching rate with the frequency deviation waveform template is greater than a preset ratio threshold, determining that the optical cable to be identified at the optical cable location to be detected is the target optical cable;
Step D40, in response to that the matching rate with the frequency deviation waveform template is not greater than the preset ratio threshold, determining that the optical cable to be identified at the optical cable location to be detected is the target optical cable.

In this embodiment, the preset frequency deviation waveform template is calibrated based on the preset disturbance stress pre-applied to the target optical cable, corresponding to the frequency deviation waveform displayed on the network management application display interface.

The preset ratio threshold is not specifically limited in this embodiment. Those skilled in the art can set it according to actual conditions to more accurately and sensitively determine whether the optical cable to be identified is the target optical cable. For example, the preset ratio threshold can be 90% or 95%.

As another embodiment, the performing image recognition processing on the collected dynamic polarization state image, and identifying whether the optical cable to be identified at the optical cable location to be detected is the target optical cable includes:
Step E10, performing image recognition processing on the collected dynamic polarization state image, and identifying frequency deviation fluctuation information within the current preset monitoring period;
Step E20, in response to that a frequency deviation variation value corresponding to the frequency deviation fluctuation information is greater than a preset threshold, determining that the optical cable to be identified at the optical cable location to be detected is the target optical cable; and
Step E30, in response to that the frequency deviation variation value corresponding to the frequency deviation fluctuation information is not greater than the preset threshold, determining that the optical cable to be identified at the optical cable location to be detected is not the target optical cable.

In this embodiment, the preset threshold is not specifically limited; those skilled in the art can set it according to actual conditions (the preset threshold can be calibrated based on the preset disturbance stress pre-applied to the target optical cable, corresponding to the frequency deviation variation value displayed on the network management application display interface), to more accurately and sensitively determine whether the optical cable to be identified is the target optical cable.

In an embodiment, the method further includes:
Step F10, in response to that applying a preset disturbance stress sequentially to a plurality of different optical cable locations to be detected, determining whether the optical cable to be identified at each of the optical cable locations to be detected is the target optical cable sequentially according to the dynamically detected polarization state information;
Step F20, taking the optical cable location to be detected on the target optical cable as a target location, connecting trajectories of two adjacent target locations in each of the target locations, and constructing and obtaining location path information; and
Step F30, determining a planned optical cable route of the target optical cable according to the location path information.

In the embodiment, in response to that applying a preset disturbance stress sequentially to a plurality of different optical cable locations to be detected, determining whether the optical cable to be identified at each of the optical cable locations to be detected is the target optical cable sequentially according to the dynamically detected polarization state information; taking the optical cable location to be detected on the target optical cable as a target location, connecting trajectories of two adjacent target locations in each of the target locations, and constructing and obtaining location path information; and determining a planned optical cable route of the target optical cable according to the location path information, thereby allowing the embodiments of the present application to achieve route identification for target optical cables by combining multi-point positioning information, facilitating the provision of accurate optical cable information for subsequent fault location, operation and maintenance cutover.

In an embodiment, after the determining a planned optical cable route of the target optical cable according to the location path information, further including:
Step G10, obtaining preset service routing planning information; the service routing planning information includes a planned service routing route of the target optical cable;
Step G20, identifying whether the planned optical cable route is consistent with the planned service routing route according to the service routing planning information; and
Step G30, in response to identifying that the planned optical cable route is inconsistent with the planned service routing route, outputting an alarm message.

In the embodiment of the present application, by obtaining preset service routing planning information; the service routing planning information includes a planned service routing route of the target optical cable; identifying whether the planned optical cable route is consistent with the planned service routing route according to the service routing planning information; and in response to identifying that the planned optical cable route is inconsistent with the planned service routing route, outputting an alarm message. Thus, by utilizing the optical cable location information of the target optical cable reported from multiple locations, the physical route of the optical cable can be inspected, thereby providing accurate optical cable information for fault location, operation and maintenance cutover.

To help understand the technical principles of the embodiments of the present application, a specific first embodiment is provided, including the following.

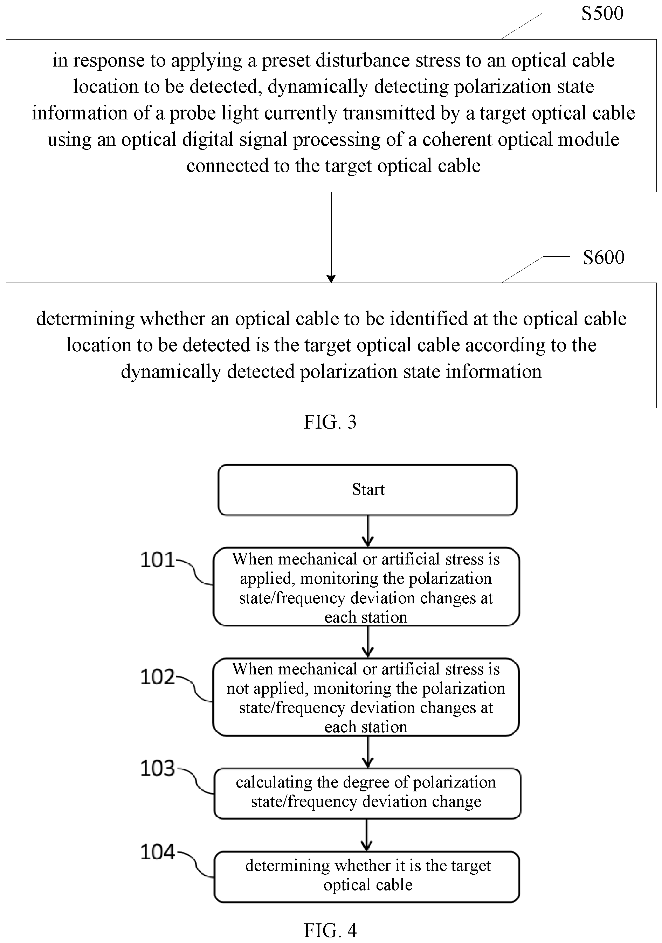

In the present application, a brillouin optical time domain reflectometer, BOTDR is used to monitor the polarization state/frequency deviation changes under conditions of applied/unapplied mechanical or artificial stress to achieve cable locating. The entire process is shown in FIG. 4, with detailed steps as follows.

Step 101, under applied mechanical or artificial stress, using the BOTDR to monitor the polarization state/frequency deviation changes in the target optical cable.

Step 102, under unapplied mechanical or artificial stress, using the BOTDR to monitor the polarization state/frequency deviation changes in the target optical cable.

Step 103, calculating the degree of polarization state/frequency deviation change.

Step 104, determining whether it is the target optical cable.

In an embodiment, stress-related polarization state/frequency deviation changes can be displayed in real time on the network management system interface (i.e., the aforementioned network management application display interface). By observing the situation of change in polarization state/frequency deviation displayed on the interface in real time, determining whether it is the target optical cable. In another embodiment, the degree of frequency deviation change in the polarization state information of the target optical cable can be compared under stress-applied and stress-unapplied conditions, and comparing the degree of frequency deviation change with a threshold value; when exceeding the threshold, the cable is identified as a target optical cable.

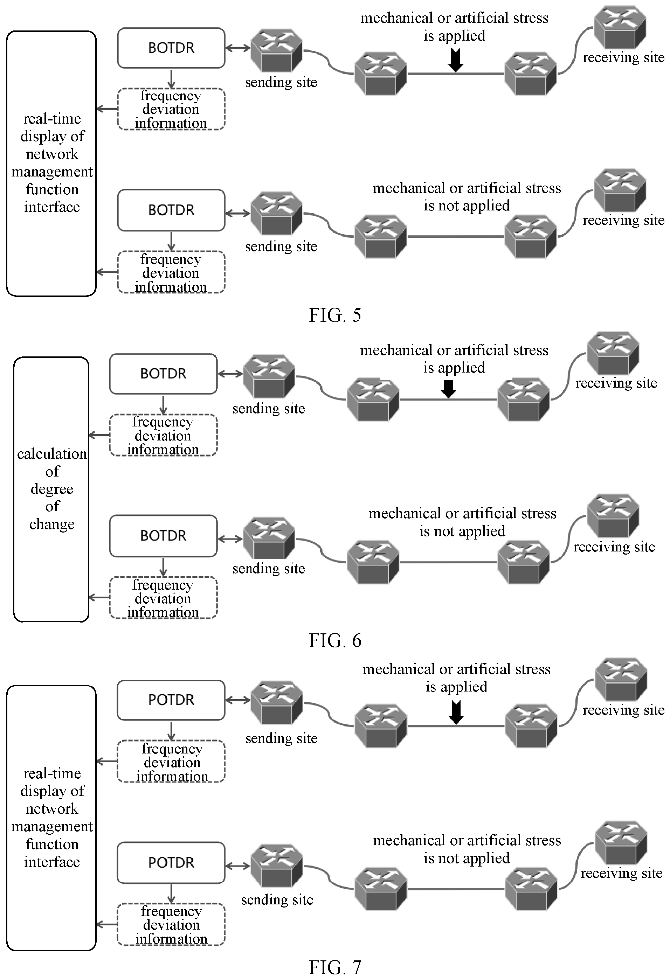

Referring to FIG. 5, which is a schematic diagram illustrating a cable locating scenario for a communication optical cable in the first embodiment of the present application. In this scenario, a BOTDR is deployed at the sending site, and the interface displays the real-time information to determine if the cable is a target optical cable. Under the inductive simultaneous transmission method, for standard single-mode optical fiber, the BOTDR can achieve inductive simultaneous transmission by wavelength division multiplexing. For few-mode/multimode optical fiber, inductive simultaneous transmission can be achieved by mode division multiplexing. For multi-core optical fibers, inductive simultaneous transmission can be achieved by wavelength division multiplexing/fiber core multiplexing. In non-inductive simultaneous transmission method, the BOTDR requires a dedicated optical fiber. The BOTDR monitors frequency deviation changes under applied/unapplied mechanical or artificial stress, and displays in real-time on the network management/user function interface. By observing the level of change on the interface, it can be determined whether it is a target optical cable.

Referring to FIG. 6, which is schematic diagram illustrating a cable locating scenario for a communication optical cable in the second embodiment of the present application. The BOTDR is deployed at the sending site, and a threshold method is used to determine whether it is a target optical cable. Under the inductive simultaneous transmission method, for standard single-mode optical fibers, the BOTDR can achieve inductive simultaneous transmission by wavelength division multiplexing. For few-mode/multimode optical fibers, inductive simultaneous transmission can be achieved by mode division multiplexing. For multi-core optical fibers, inductive simultaneous transmission can be achieved by wavelength division multiplexing/fiber core multiplexing. In non-inductive simultaneous transmission mode, the BOTDR requires a dedicated optical fiber. The BOTDR monitors frequency deviation changes when mechanical or artificial stress is applied or unapplied. By calculating the degree of polarization state/frequency deviation change, and comparing the degree of frequency deviation change with a preset threshold; when exceeding the threshold, the cable is identified as a target optical cable

In this embodiment, if the method of locating the optical cable by applying external stress to the target optical cable is described, and the polarization state and frequency deviation changes of the target optical cable are displayed on the user function interface, as shown in FIG. 11, the polarization state waveform shown within the rectangle in FIG. 11 represents the polarization state information generated by the preset disturbance stress.

During normal network operation, maintenance personnel can use the method described in this specific embodiment to accurately locate the target optical cable in a complex live network environment and achieve target optical cable positioning. Based on multi-point positioning information, the optical cable route can also be identified, thus providing accurate optical cable information for fault location, operation and maintenance cutover. This specific embodiment can also use optical cable location information reported from multiple locations to enable the inspection of the physical route of optical cables.

The many details described in this specific embodiment are only helpful for understanding the technical concept of the present application and do not constitute a limitation of the present application. Any simple modifications based on this technical concept should be within the scope of the present application.

### Second Embodiment

Based on the first embodiment of the present application, in another embodiment of the present application, the content that is the same as or similar to that in the first embodiment can be referred to the above description, and will not be repeated hereafter. Based on this, referring to FIG. 2, this embodiment also provides a cable locating method for a communication optical cable, the method including:
Step S300, in response to applying a preset disturbance stress to an optical cable location to be detected, dynamically detecting polarization state information of a probe light currently transmitted by a target optical cable using a polarization optical time domain reflectometer connected to the target optical cable.

In this embodiment, the optical cable location to be detected refers to a preset optical cable detection position on the optical cable to be identified. Those skilled in the art can apply the preset disturbance stress to the optical cable location to be detected using mechanical tools (e.g., a stress application tool including an optical cable clamp and a vibration generator) or manually. The preset disturbance stress refers to the stress value applied within a preset duration that will undergo a preset change.

In this embodiment, the polarization optical time domain reflectometer, POTDR is a fully distributed optical fiber sensor based on optical time domain reflectance technology. It senses by detecting changes in the polarization state of scattered light waves in the optical fiber, featuring high sensitivity, low false alarm rate, and the ability to measure and locate disturbances at any position along the optical fiber.

The polarization optical time domain reflectometer uses a broadband laser of approximately 0.1 nanometers to generate polarized light pulses. Its specific working principle is as follows: the backscattered Rayleigh signal is affected by local polarization state changes. If interference occurs at a certain position on the sensing optical fiber, the original polarization state will be modulated. The POTDR can monitor the spatial distribution of the optical fiber's polarization characteristics, and the polarization characteristics can be adjusted by pressure, strain, temperature, and electric and magnetic fields. Due to the transient change in the polarization state of an optical pulse over time, the polarization optical time domain reflectometer can be used for dynamic measurement of disturbance signals.

Step S400, determining whether an optical cable to be identified at the optical cable location to be detected is the target optical cable according to the dynamically detected polarization state information.

As those skilled in the art will know, the dynamically detected polarization state information can be used to reflect the stress change information at various points along the optical fiber. This is because the refractive index of the optical fiber changes with external stress. When high coherence light is used for detection, the phase of the reflected light at each point of the optical fiber changes with the stress value. The corresponding change in the reflected light phase is proportional to the magnitude of the stress change in the optical fiber. Therefore, the target optical cable can be analyzed for whether it is subjected to a preset disturbance stress by detecting the change in the reflected light phase. As shown in FIG. 11, the polarization state waveform displayed within the rectangular frame of FIG. 11 represents the polarization state information generated by a preset disturbance stress.

Exemplary, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

This embodiment utilizes sensing devices such as polarization optical time domain reflectometer, POTDR at various sites in the optical network for cable locating. In the inductive simultaneous transmission mode, the probe light transmitted and received by the optical module can achieve inductive simultaneous transmission with the service light. For standard single-mode optical fiber, inductive simultaneous transmission can be achieved by wavelength division multiplexing. For few-mode/multimode optical fiber, inductive simultaneous transmission can be achieved by mode division multiplexing. For multi-core optical fiber, inductive simultaneous transmission can be achieved by mode division multiplexing/core multiplexing. In the non-inductive simultaneous transmission mode, the POTDR need to be connected to any optical fiber of the target optical cable in the equipment room/site.

In this embodiment, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable, thereby ensuring that the normal transmission of the service light is not affected during cable locating of the target optical cable, thus preserving the normal operation of user services and improving the robustness of the cable locating method for the communication optical cable in this embodiment.

The location principle for cable locating of the communication optical cable provided in the present application embodiment is as follows: when the optical cable winding reels in the optical fiber well are tangled together and the target optical cable cannot be identified, a preset disturbance stress can be applied at the preset optical cable detection position (i.e., the optical cable location to be detected) of the optical cable to be identified based on mechanical tools or manually; then, dynamically detecting polarization state information of a probe light currently transmitted by a target optical cable using a polarization optical time domain reflectometer connected to the target optical cable. When the optical cable to be identified is not the target optical cable, the detected polarization state information is equivalent to that caused by the contact point between the optical cable to be identified and the target optical cable. Therefore, when the optical cable to be identified and the target optical cable are not the same optical cable, the detected polarization state information is relatively stable (it will not produce a certain degree of frequency change). When the optical cable to be identified and the target optical cable are the same optical cable, the polarization state information will produce a frequency deviation of a certain magnitude due to the preset disturbance stress on the optical fiber.

The present application relates to the field of transmission network communication, and particularly to the cable locating and positioning technology of communication optical cables during the network operation and maintenance phase of Optical Transport Network, OTN.

At external optical fiber wells, when external stress, generated mechanically or manually, is applied to the target optical cable, the brillouin optical time domain reflectometer, POTDR can detect changes in polarization state or frequency deviation caused by external stress. Specifically, when external stress is applied to a non-target optical cable, the POTDR connected to the target optical cable will not detect any changes in polarization state or frequency deviation. Furthermore, the POTDR can locate the target optical cable and report this location information to the asset management and maintenance system. Maintenance personnel can then use this multi-point location information to determine the consistency between service routes and planned routes, and to identify potential routing inconsistencies within the network.

The present application proposes a cable locating method for a communication optical cable, an electronic device, and a computer-readable storage medium. In this cable locating method for the communication optical cable, the technical solution of the present application involves that: in response to applying a preset disturbance stress to an optical cable location to be detected, dynamically detecting polarization state information of a probe light currently transmitted by a target optical cable using a polarization optical time domain reflectometer connected to the target optical cable; and then, determining whether an optical cable to be identified at the optical cable location to be detected is the target optical cable according to the dynamically detected polarization state information.

Compared to current optical cable-finding positioning methods, this embodiment eliminates the need to strip the protective layer of the optical cable or bend the fiber core at the test point (i.e., the optical cable location to be detected), thus avoiding damage to the optical cable. Furthermore, this embodiment utilizes the high-precision monitoring mechanism of polarized light against the probe light, combining with inductive simultaneous transmission method or non-inductive simultaneous transmission method to monitor changes in polarization state or frequency deviation caused by external stress (the external stress can be applied mechanically or manually). This allows for more accurate location of the target optical cable, improving the accuracy of cable locating for optical cables, facilitating precise location of target optical cables in complex network environments and enabling target optical cable positioning. Moreover, it can further combine multi-point location information to achieve route identification for the target optical cable, providing accurate optical cable information for fault location, maintenance, and splicing.

In one implementable method, the determining whether the optical cable to be identified at the optical cable location to be detected is the target optical cable according to the dynamically detected polarization state information includes: converting the dynamically detected polarization state information into a dynamic polarization state image; and outputting and displaying the dynamic polarization state image by a preset network management application display interface, the dynamic polarization state image is configured to indicate whether the optical cable to be identified at the optical cable location to be detected is the target optical cable.

Those skilled in the art will understand that the polarization state information refers to a polarization state signal detected by a polarization optical time domain reflectometer.

In some embodiments, the determining whether the optical cable to be identified at the optical cable location to be detected is the target optical cable according to the dynamically detected polarization state information includes: identifying frequency deviation fluctuation information within a current preset monitoring period according to the dynamically detected polarization state information; in response to that a frequency deviation variation value corresponding to the frequency deviation fluctuation information is greater than a preset threshold, determining that the optical cable to be identified at the optical cable location to be detected is the target optical cable; and in response to that the frequency deviation variation value corresponding to the frequency deviation fluctuation information is not greater than the preset threshold, determining that the optical cable to be identified at the optical cable location to be detected is not the target optical cable.

In some embodiments, the determining whether the optical cable to be identified at the optical cable location to be detected is the target optical cable according to the dynamically detected polarization state information includes: converting the dynamically detected polarization state information into a dynamic polarization state image; outputting and displaying the dynamic polarization state image by a preset network management application display interface; and collecting the dynamic polarization state image displayed on the network management application display interface, performing image recognition processing on the collected dynamic polarization state image, and identifying whether the optical cable to be identified at the optical cable location to be detected is the target optical cable.

In some embodiments, the method further includes: in response to that applying a preset disturbance stress sequentially to a plurality of different optical cable locations to be detected, determining whether the optical cable to be identified at each of the optical cable locations to be detected is the target optical cable sequentially according to the dynamically detected polarization state information; taking the optical cable location to be detected on the target optical cable as a target location, connecting trajectories of two adjacent target locations in each of the target locations, and constructing and obtaining location path information; and determining a planned optical cable route of the target optical cable according to the location path information.

In some embodiments, after the determining a planned optical cable route of the target optical cable according to the location path information, further including: obtaining preset service routing planning information; the service routing planning information includes a planned service routing route of the target optical cable; identifying whether the planned optical cable route is consistent with the planned service routing route according to the service routing planning information; and in response to identifying that the planned optical cable route is inconsistent with the planned service routing route, outputting an alarm message.

In some embodiments, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

The cable locating method for the communication optical cable provided in the present application adopts the same or similar technical features as in the first embodiment above, and can solve the technical problem of how to improve the accuracy of optical cable locating without damaging the optical cable. Compared with the prior art, the beneficial effects of the cable locating device for the communication optical cable provided in the present application are the same as those of the cable locating method for the communication optical cable provided in the first embodiment above, and other technical features in the cable locating method for the communication optical cable are the same as those disclosed in the first embodiment above, and will not be repeated here.

To help understand the technical principles of the embodiments of the present application, the specific second embodiment is provided, including the following.

In the present application, the polarization optical time domain reflectometer, POTDR is used to monitor the polarization state/frequency deviation changes under conditions of applied/unapplied mechanical or artificial stress to achieve cable locating. The entire process is shown in FIG. 4, with detailed steps as follows.

Step 101, under applied mechanical or artificial stress, using the POTDR to monitor the polarization state/frequency deviation changes in the target optical cable.

Step 102, under unapplied mechanical or artificial stress, using the POTDR to monitor the polarization state/frequency deviation changes in the target optical cable.

Step 103, calculating the degree of polarization state/frequency deviation change.

Step 104, determining whether it is the target optical cable.

In an embodiment, stress-related polarization state/frequency deviation changes can be displayed in real time on the network management system interface (i.e., the aforementioned network management application display interface). By observing the situation of change in polarization state/frequency deviation displayed on the interface in real time, determining whether it is the target optical cable. In another embodiment, the degree of frequency deviation change in the polarization state information of the target optical cable can be compared under stress-applied and stress-unapplied conditions, and comparing the degree of frequency deviation change with a threshold value; when exceeding the threshold, the cable is identified as a target optical cable

Referring to FIG. 7, which is a schematic diagram illustrating a cable locating scenario for a communication optical cable in the third embodiment of the present application. The interface displays the real-time information to determine if the cable is a target optical cable. Under the inductive simultaneous transmission method, for standard single-mode optical fiber, the POTDR can achieve inductive simultaneous transmission by wavelength division multiplexing. For few-mode/multimode optical fiber, inductive simultaneous transmission can be achieved by mode division multiplexing. For multi-core optical fibers, simultaneous communication can be achieved by wavelength division multiplexing/fiber core multiplexing. In non-inductive simultaneous transmission method, the POTDR requires a dedicated optical fiber. The POTDR monitors frequency deviation changes under applied/unapplied mechanical or artificial stress, and displays in real-time on the network management/user function interface. By observing the level of change on the interface, it can be determined whether it is a target optical cable.

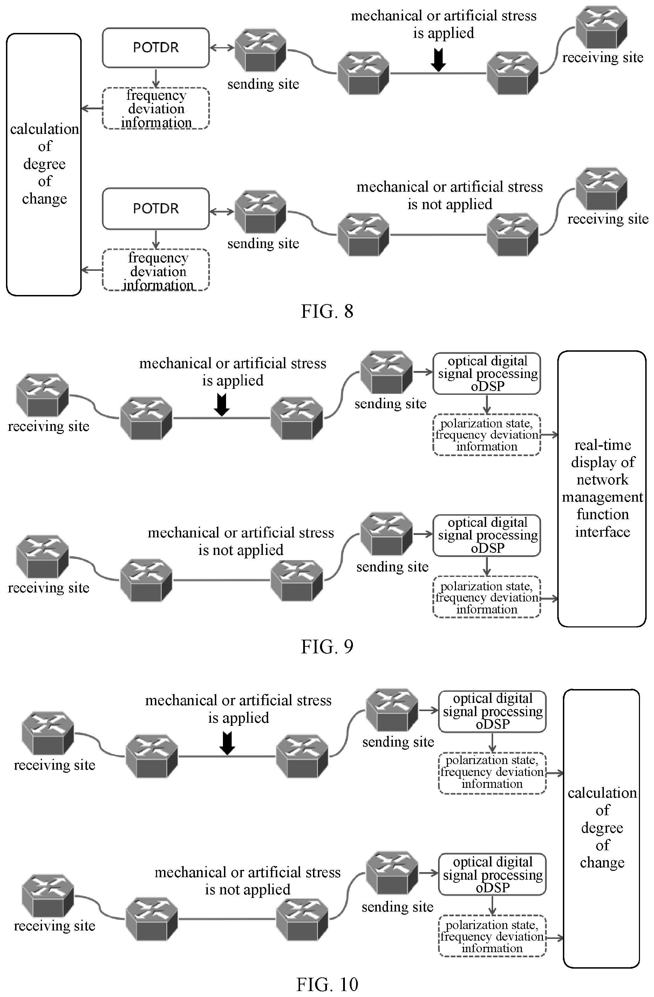

Referring to FIG. 8, which is schematic diagram illustrating a cable locating scenario for a communication optical cable in the fourth embodiment of the present application. The POTDR is deployed at the sending site, and a threshold method is used to determine whether it is a target optical cable. Under the inductive simultaneous transmission method, for standard single-mode optical fibers, the POTDR can achieve inductive simultaneous transmission by wavelength division multiplexing. For few-mode/multimode optical fibers, inductive simultaneous transmission can be achieved by mode division multiplexing. For multi-core optical fibers, inductive simultaneous transmission can be achieved by wavelength division multiplexing/fiber core multiplexing. In non-inductive simultaneous transmission mode, the POTDR requires a dedicated optical fiber. The POTDR monitors frequency deviation changes when mechanical or artificial stress is applied or unapplied. By calculating the degree of polarization state/frequency deviation change, and comparing the degree of frequency deviation change with a preset threshold; when exceeding the threshold, the cable is identified as the target optical cable.

In this embodiment, if the method of locating the optical cable by applying external stress to the target optical cable is described, and the polarization state and frequency deviation changes of the target optical cable are displayed on the user function interface, as shown in FIG. 11, the polarization state waveform shown within the rectangle in FIG. 11 represents the polarization state information generated by the preset disturbance stress.

During normal network operation, maintenance personnel can use the method described in this specific embodiment to accurately locate the target optical cable in a complex live network environment and achieve target optical cable positioning. Based on multi-point positioning information, the optical cable route can also be identified, thus providing accurate optical cable information for fault location, operation and maintenance cutover. This specific embodiment can also use optical cable location information reported from multiple locations to enable the inspection of the physical route of optical cables.

The many details described in this specific embodiment are only helpful for understanding the technical concept of the present application and do not constitute a limitation of the present application. Any simple modifications based on this technical concept should be within the scope of the present application.

### Third Embodiment

Based on the first embodiment of the present application, in another embodiment of the present application, the content that is the same as or similar to that in the first embodiment can be referred to the above description, and will not be repeated hereafter. Based on this, referring to FIG. 3, this embodiment also provides a cable locating method for a communication optical cable, the method including:
Step S500, in response to applying a preset disturbance stress to an optical cable location to be detected, dynamically detecting polarization state information of a probe light currently transmitted by a target optical cable using an optical digital signal processing of a coherent optical module connected to the target optical cable.

In this embodiment, the optical cable location to be detected refers to a preset optical cable detection position on the optical cable to be identified. Those skilled in the art can apply the preset disturbance stress to the optical cable location to be detected using mechanical tools (e.g., a stress application tool including an optical cable clamp and a vibration generator) or manually. The preset disturbance stress refers to the stress value applied within a preset duration that will undergo a preset change.

Step S600, determining whether an optical cable to be identified at the optical cable location to be detected is the target optical cable according to the dynamically detected polarization state information.

As those skilled in the art will know, the dynamically detected polarization state information can be used to reflect the stress change information at various points along the optical fiber. This is because the refractive index of the optical fiber changes with external stress. When high coherence light is used for detection, the phase of the reflected light at each point of the optical fiber changes with the stress value. The corresponding change in the reflected light phase is proportional to the magnitude of the stress change in the optical fiber. Therefore, the target optical cable can be analyzed for whether it is subjected to a preset disturbance stress by detecting the change in the reflected light phase. As shown in FIG. 11, the polarization state waveform displayed within the rectangular frame of FIG. 11 represents the polarization state information generated by a preset disturbance stress.

Exemplary, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

This embodiment utilizes the optical digital signal processing, oDSP of the coherent optical module in each site of the optical network for cable locating. In the inductive simultaneous transmission mode, the probe light transmitted and received by the optical module can achieve inductive simultaneous transmission with the service light. For standard single-mode optical fiber, inductive simultaneous transmission can be achieved by wavelength division multiplexing. For few-mode/multimode optical fiber, inductive simultaneous transmission can be achieved by mode division multiplexing. For multi-core optical fiber, inductive simultaneous transmission can be achieved by mode division multiplexing/core multiplexing.

In this embodiment, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable, thereby ensuring that the normal transmission of the service light is not affected during cable locating of the target optical cable, thus preserving the normal operation of user services and improving the robustness of the cable locating method for the communication optical cable in this embodiment.

The location principle for cable locating of the communication optical cable provided in the present application embodiment is as follows: when the optical cable winding reels in the optical fiber well are tangled together and the target optical cable cannot be identified, a preset disturbance stress can be applied at the preset optical cable detection position (i.e., the optical cable location to be detected) of the optical cable to be identified based on mechanical tools or manually; then, dynamically detecting polarization state information of a probe light currently transmitted by a target optical cable using the optical digital signal processing, oDSP of the coherent optical module connected to the target optical cable. When the optical cable to be identified is not the target optical cable, the detected polarization state information is equivalent to that caused by the contact point between the optical cable to be identified and the target optical cable. Therefore, when the optical cable to be identified and the target optical cable are not the same optical cable, the detected polarization state information is relatively stable (it will not produce a certain degree of frequency change). When the optical cable to be identified and the target optical cable are the same optical cable, the polarization state information will produce a frequency deviation of a certain magnitude due to the preset disturbance stress on the optical fiber.

The present application relates to the field of transmission network communication, and particularly to the cable locating and positioning technology of communication optical cables during the network operation and maintenance phase of Optical Transport Network, OTN.

At external optical fiber wells, when external stress, generated mechanically or manually, is applied to the target optical cable, the optical digital signal processing, oDSP can detect changes in polarization state or frequency deviation caused by external stress. Specifically, when external stress is applied to a non-target optical cable, the oDSP connected to the target optical cable will not detect any changes in polarization state or frequency deviation. Furthermore, the oDSP can locate the target optical cable and report this location information to the asset management and maintenance system. Maintenance personnel can then use this multi-point location information to determine the consistency between service routes and planned routes, and to identify potential routing inconsistencies within the network.

The present application proposes a cable locating method for a communication optical cable, an electronic device, and a computer-readable storage medium. In this cable locating method for the communication optical cable, the technical solution of the present application involves that: in response to applying a preset disturbance stress to an optical cable location to be detected, dynamically detecting polarization state information of a probe light currently transmitted by a target optical cable using the optical digital signal processing, oDSP of the coherent optical module connected to the target optical cable; and then, determining whether an optical cable to be identified at the optical cable location to be detected is the target optical cable according to the dynamically detected polarization state information.

Compared to current optical cable-finding positioning methods, this embodiment eliminates the need to strip the protective layer of the optical cable or bend the fiber core at the test point (i.e., the optical cable location to be detected), thus avoiding damage to the optical cable. Furthermore, this embodiment utilizes the high-precision monitoring mechanism of the optical digital signal processing, oDSP against the probe light, combining with inductive simultaneous transmission method or non-inductive simultaneous transmission method to monitor changes in polarization state or frequency deviation caused by external stress (the external stress can be applied mechanically or manually). This allows for more accurate location of the target optical cable, improving the accuracy of cable locating for optical cables, facilitating precise location of target optical cables in complex network environments and enabling target optical cable positioning. Moreover, it can further combine multi-point location information to achieve route identification for the target optical cable, providing accurate optical cable information for fault location, maintenance, and splicing.

In one implementable method, the determining whether the optical cable to be identified at the optical cable location to be detected is the target optical cable according to the dynamically detected polarization state information includes: converting the dynamically detected polarization state information into a dynamic polarization state image; and outputting and displaying the dynamic polarization state image by a preset network management application display interface, the dynamic polarization state image is configured to indicate whether the optical cable to be identified at the optical cable location to be detected is the target optical cable.

Those skilled in the art will understand that the polarization state information refers to a polarization state signal detected by the optical digital signal processing, oDSP.

In some embodiments, the determining whether the optical cable to be identified at the optical cable location to be detected is the target optical cable according to the dynamically detected polarization state information includes: identifying frequency deviation fluctuation information within a current preset monitoring period according to the dynamically detected polarization state information; in response to that a frequency deviation variation value corresponding to the frequency deviation fluctuation information is greater than a preset threshold, determining that the optical cable to be identified at the optical cable location to be detected is the target optical cable; and in response to that the frequency deviation variation value corresponding to the frequency deviation fluctuation information is not greater than the preset threshold, determining that the optical cable to be identified at the optical cable location to be detected is not the target optical cable.

In some embodiments, the determining whether the optical cable to be identified at the optical cable location to be detected is the target optical cable according to the dynamically detected polarization state information includes: converting the dynamically detected polarization state information into a dynamic polarization state image; outputting and displaying the dynamic polarization state image by a preset network management application display interface; and collecting the dynamic polarization state image displayed on the network management application display interface, performing image recognition processing on the collected dynamic polarization state image, and identifying whether the optical cable to be identified at the optical cable location to be detected is the target optical cable.

In some embodiments, the method further includes: in response to that applying a preset disturbance stress sequentially to a plurality of different optical cable locations to be detected, determining whether the optical cable to be identified at each of the optical cable locations to be detected is the target optical cable sequentially according to the dynamically detected polarization state information; taking the optical cable location to be detected on the target optical cable as a target location, connecting trajectories of two adjacent target locations in each of the target locations, and constructing and obtaining location path information; and determining a planned optical cable route of the target optical cable according to the location path information.

In some embodiments, after the determining a planned optical cable route of the target optical cable according to the location path information, further including: obtaining preset service routing planning information; the service routing planning information includes a planned service routing route of the target optical cable; identifying whether the planned optical cable route is consistent with the planned service routing route according to the service routing planning information; and in response to identifying that the planned optical cable route is inconsistent with the planned service routing route, outputting an alarm message.

In some embodiments, a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

The cable locating method for the communication optical cable provided in the present application adopts the same or similar technical features as in the first embodiment above, and can solve the technical problem of how to improve the accuracy of optical cable locating without damaging the optical cable. Compared with the prior art, the beneficial effects of the cable locating device for the communication optical cable provided in the present application are the same as those of the cable locating method for the communication optical cable provided in the first embodiment above, and other technical features in the cable locating method for the communication optical cable are the same as those disclosed in the first embodiment above, and will not be repeated here.

To help understand the technical principles of the embodiments of the present application, the specific third embodiment is provided, including the following.

In the present application, the optical digital signal processing, oDSP is used to monitor the polarization state and frequency deviation changes under conditions of applied/unapplied mechanical or artificial stress to achieve cable locating. The entire process is shown in FIG. 4, with detailed steps as follows.

Step 101, under applied mechanical or artificial stress, using the optical digital signal processing, oDSP to monitor the polarization state/frequency deviation changes in the target optical cable.

Step 102, under unapplied mechanical or artificial stress, using the optical digital signal processing, oDSP to monitor the polarization state/frequency deviation changes in the target optical cable.

Step 103, calculating the degree of polarization state/frequency deviation change.

Step 104, determining whether it is the target optical cable.

In an embodiment, stress-related polarization state/frequency deviation changes can be displayed in real time on the network management system interface (i.e., the aforementioned network management application display interface). By observing the situation of change in polarization state/frequency deviation displayed on the interface in real time, determining whether it is the target optical cable. In another embodiment, the degree of frequency deviation change in the polarization state information of the target optical cable can be compared under stress-applied and stress-unapplied conditions, and comparing the degree of frequency deviation change with a threshold value; when exceeding the threshold, the cable is identified as a target optical cable

Referring to FIG. 9, which is a schematic diagram illustrating a cable locating scenario for a communication optical cable in a fifth embodiment of the present application. The interface displays the real-time information to determine if the cable is a target optical cable. Since the coherent optical module is a basic building block of an optical network, the service light module can be directly used for cable locating, achieving integrated communication and sensing. At the receiving site, the oDSP within the coherent optical module monitors the polarization state and frequency deviation changes of the target optical cable under applied/unapplied mechanical or artificial stress, and displays in real-time on the network management/user function interface. By observing the level of change on the interface, it can be determined whether it is a target optical cable.

Referring to FIG. 10, which is a schematic diagram illustrating a cable locating scenario for a communication optical cable in a sixth embodiment of the present application. A threshold method is used to determine whether it is the target optical cable. Since the coherent optical module is a basic building block of an optical network, the service light module can be used for cable locating, achieving integrated sensing and communication. At the receiving site, the oDSP within the coherent optical module monitors the polarization state and frequency deviation changes of the target optical cable under applied/unapplied mechanical or artificial stress. Determining by a threshold method; if the degree of change exceeds the threshold, it is identified as the target optical cable.

In this embodiment, if the method of locating the optical cable by applying external stress to the target optical cable is described, and the polarization state and frequency deviation changes of the target optical cable are displayed on the user function interface, as shown in FIG. 11, the polarization state waveform shown within the rectangle in FIG. 11 represents the polarization state information generated by the preset disturbance stress.

During normal network operation, maintenance personnel can use the method described in this specific embodiment to accurately locate the target optical cable in a complex live network environment and achieve target optical cable positioning. Based on multi-point positioning information, the optical cable route can also be identified, thus providing accurate optical cable information for fault location, operation and maintenance cutover. This specific embodiment can also use optical cable location information reported from multiple locations to enable the inspection of the physical route of optical cables.

The many details described in this specific third embodiment are only helpful for understanding the technical concept of the present application and do not constitute a limitation of the present application. Any simple modifications based on this technical concept should be within the scope of the present application.

### Fourth Embodiment

The present application provides an electronic device, including: at least one processor, and a memory communicatively connected to the at least one processor; the memory stores instructions executable by the at least one processor; when the instructions are executed by the at least one processor, enable the at least one processor to perform the cable locating method for the communication optical cable described in the first embodiment above.

Referring to FIG. 12, a schematic diagram of an electronic device suitable for implementing embodiments of the present application is shown below. As shown in FIG. 12, the electronic device may include a processing device 1001 (e.g., a central processing unit, a graphics processor, etc.), which can perform various appropriate actions and processes according to a program stored in a read-only memory (ROM 1002) or a program loaded from a storage device into a random access memory (RAM 1004). The RAM 1004 also stores various programs and data required for the operation of the electronic device. Processing device 1001, ROM 1002, and RAM 1004 are interconnected via bus 1005. Input/output (I/O) interfaces are also connected to bus 1005.

Typically, the following systems may be connected to I/O interface 1006: input devices 1007 including, for example, touchscreens, touchpads, keyboards, mice, image sensors, microphones, etc.; output devices 1008 including, for example, liquid crystal displays (LCDs), speakers, vibrators, etc.; storage devices 1003 including, for example, magnetic tapes, hard disks, etc.; and communication devices 1009. Communication device 1009 allows the electronic device to communicate wirelessly or wiredly with other devices to exchange data. Although electronic devices with various systems are shown in the figures, it is not required to implement or possess all of the systems shown. More or fewer systems may be implemented alternatively.

According to embodiments of the present application, the processes described above with reference to the flowcharts can be implemented as computer software programs. For example, embodiments of the present application include a computer program product including a computer program carried on a computer-readable medium, the computer program containing program code for performing the methods shown in the flowcharts. In such an embodiment, the computer program can be downloaded and installed from a network via a communication device, or installed from storage device 1003, or installed from ROM 1002. When the computer program is executed by processing device 1001, it performs the functions defined in the methods of the present application embodiment.

The electronic device provided in the present application employs the cable locating method for the communication optical cable described in the above embodiments. It solves the technical problem of improving the accuracy of cable locating and positioning of the optical cable without damaging the optical cable. Compared with the prior art, the beneficial effects of the electronic device provided in the present application are the same as the beneficial effects of the cable locating method for the communication optical cable described in the above embodiments, and other technical features of this electronic device are the same as technical features disclosed in the previous embodiment, and will not be repeated here.

Various parts of the present application can be implemented using hardware, software, firmware, or combinations thereof. In the description of the above embodiments, specific features, structures, materials, or characteristics can be combined in any suitable manner in one or more embodiments or embodiments.

The above descriptions are merely specific embodiments of the present application, but the scope of the present application is not limited thereto. Any variations or substitutions that can be easily conceived by those skilled in the art within the scope of the technology disclosed in the present application should be included within the scope of the present application. Therefore, the scope of the present application should be determined by the scope of the claims.

### Fifth Embodiment

The present application provides a computer-readable storage medium having computer-readable program instructions stored thereon. These computer-readable program instructions are used to execute the cable locating method for the communication optical cable described in the above embodiments.

The computer-readable storage medium provided in embodiments of the present application can be, for example, a USB flash drive, but is not limited to, electrical, magnetic, optical, electromagnetic, infrared, or semiconductor systems, devices, or any combination thereof. More specific embodiments of computer-readable storage media may include, but are not limited to: electrical connections with one or more wires, portable computer disks, hard disks, random access memory (RAM), read-only memory (ROM), erasable programmable read-only memory (EPROM or flash memory), optical fiber, portable compact disk read-only memory (CD-ROM), optical storage devices, magnetic storage devices, or any suitable combination thereof. In this embodiment, the computer-readable storage medium can be any tangible medium containing or storing a program that can be used by or in conjunction with an instruction execution system, system, or device. The program code contained on the computer-readable storage medium can be transmitted using any suitable medium, including but not limited to: wires, optical cables, RF (radio frequency), etc., or any suitable combination thereof.

The aforementioned computer-readable storage medium may be included in an electronic device or may exist independently without being assembled into an electronic device.

The aforementioned computer-readable storage medium carries one or more programs, when the one or more programs executed by the electronic device, cause the electronic device to: in response to applying a preset disturbance stress to an optical cable location to be detected, dynamically detect polarization state information of a probe light currently transmitted by a target optical cable using a brillouin optical time domain reflectometer connected to the target optical cable; and determine whether an optical cable to be identified at the optical cable location to be detected is the target optical cable according to the dynamically detected polarization state information; alternatively, in response to applying a preset disturbance stress to an optical cable location to be detected, dynamically detect polarization state information of a probe light currently transmitted by a target optical cable using an optical digital signal processing of a coherent optical module connected to the target optical cable; and determine whether an optical cable to be identified at the optical cable location to be detected is the target optical cable according to the dynamically detected polarization state information; alternatively, in response to applying a preset disturbance stress to an optical cable location to be detected, dynamically detect polarization state information of a probe light currently transmitted by a target optical cable using a polarization optical time domain reflectometer connected to the target optical cable; and determine whether an optical cable to be identified at the optical cable location to be detected is the target optical cable according to the dynamically detected polarization state information.

Computer program code for performing the operations of the present application can be written in one or more programming languages or a combination thereof. These programming languages include object-oriented programming languages (such as Java, Smalltalk, and C++) and conventional procedural programming languages (such as C or similar languages). The program code can be executed entirely on the user's computer, partially on the user's computer, as a standalone software package, partially on the user's computer and partially on a remote computer, or entirely on a remote computer or server. In cases involving remote computers, the remote computer can be connected to the user's computer via any type of network (including a local area network (LAN) or a wide area network (WAN)), or it can be connected to an external computer (e.g., via the Internet using an Internet service provider).

The flowcharts and block diagrams in the accompanying drawings illustrate the architecture, functionality, and operation of possible implementations of systems, methods, and computer program products according to various embodiments of the present application. In this regard, each block in a flowchart or block diagram may represent a module, segment, or portion of code containing one or more executable instructions for implementing a specified logical function. It should also be noted that in some alternative implementations, the functions indicated in the blocks may occur in a different order than those indicated in the drawings. For example, two consecutively indicated blocks may actually be executed substantially in parallel, and they may sometimes be executed in reverse order, depending on the functions involved. It should also be noted that each block in the block diagrams and/or flowcharts, and combinations of blocks in the block diagrams and/or flowcharts, can be implemented using a dedicated hardware-based system that performs the specified function or operation, or using a combination of dedicated hardware and computer instructions.

Modules described in the embodiments of the present application can be implemented in software or hardware. The names of modules do not, in some cases, constitute a limitation on the unit itself.

The computer-readable storage medium provided in the present application stores computer-readable program instructions for executing the cable locating method for the communication optical cable described above, which can solve the technical problem of improving the accuracy of cable locating and positioning of optical cables without damaging the optical cable. Compared with the prior art, the beneficial effects of the computer-readable storage medium provided in the present application are the same as the beneficial effects of the cable locating methods for the communication optical cable provided in the first embodiment to the third embodiment above, and will not be repeated here.

### Sixth Embodiment

The present application also provides a computer program product, including a computer program that, when executed by a processor, implements the steps of the cable locating method for the communication optical cable as described above.

The computer program product provided in the present application solves the technical problem of improving the accuracy of cable locating and positioning of optical cables without damaging the optical cable. Compared with the prior art, the beneficial effects of the computer program product provided in the present application are the same as the beneficial effects of the cable locating method for the communication optical cable provided in the first embodiment to the third embodiment above, and will not be repeated here.

The above are merely some embodiments of the present application and do not limit the scope of the present application. Any equivalent structural or procedural transformations made based on the content of the present application's specification and drawings, or direct or indirect applications in other related technical fields, are similarly included within the scope of the present application.

## Claims

1. A cable locating method for a communication optical cable, **characterized by** comprising:
in response to applying a preset disturbance stress to an optical cable location to be detected, dynamically detecting polarization state information of a probe light currently transmitted by a target optical cable using a brillouin optical time domain reflectometer connected to the target optical cable; and
determining whether an optical cable to be identified at the optical cable location to be detected is the target optical cable according to the dynamically detected polarization state information.

2. The cable locating method for the communication optical cable according to claim 1, wherein the determining whether the optical cable to be identified at the optical cable location to be detected is the target optical cable according to the dynamically detected polarization state information comprises:
converting the dynamically detected polarization state information into a dynamic polarization state image; and
outputting and displaying the dynamic polarization state image by a preset network management application display interface, wherein the dynamic polarization state image is configured to indicate whether the optical cable to be identified at the optical cable location to be detected is the target optical cable.

3. The cable locating method for the communication optical cable according to claim 1, wherein the determining whether the optical cable to be identified at the optical cable location to be detected is the target optical cable according to the dynamically detected polarization state information comprises:
identifying frequency deviation fluctuation information within a current preset monitoring period according to the dynamically detected polarization state information;
in response to that a frequency deviation variation value corresponding to the frequency deviation fluctuation information is greater than a preset threshold, determining that the optical cable to be identified at the optical cable location to be detected is the target optical cable; and
in response to that the frequency deviation variation value corresponding to the frequency deviation fluctuation information is not greater than the preset threshold, determining that the optical cable to be identified at the optical cable location to be detected is not the target optical cable.

4. The cable locating method for the communication optical cable according to claim 1, wherein the determining whether the optical cable to be identified at the optical cable location to be detected is the target optical cable according to the dynamically detected polarization state information comprises:
converting the dynamically detected polarization state information into a dynamic polarization state image;
outputting and displaying the dynamic polarization state image by a preset network management application display interface; and
collecting the dynamic polarization state image displayed on the network management application display interface, performing image recognition processing on the collected dynamic polarization state image, and identifying whether the optical cable to be identified at the optical cable location to be detected is the target optical cable.

5. The cable locating method for the communication optical cable according to claim 1, **characterized by** further comprising:
in response to applying a preset disturbance stress sequentially to a plurality of different optical cable locations to be detected, determining whether the optical cable to be identified at each of the optical cable locations to be detected is the target optical cable sequentially according to the dynamically detected polarization state information;
taking the optical cable location to be detected on the target optical cable as a target location, connecting trajectories of two adjacent target locations in each of the target locations, and constructing and obtaining location path information; and
determining a planned optical cable route of the target optical cable according to the location path information.

6. The cable locating method for the communication optical cable according to claim 5, wherein after the determining the planned optical cable route of the target optical cable according to the location path information, the method further comprises:
obtaining preset service routing planning information; wherein the service routing planning information comprises a planned service routing route of the target optical cable;
identifying whether the planned optical cable route is consistent with the planned service routing route according to the service routing planning information; and
in response to identifying that the planned optical cable route is inconsistent with the planned service routing route, outputting an alarm message.

7. The cable locating method for the communication optical cable according to any one of claims 1 to 6, wherein a service light transmitted by the target optical cable and the probe light are in an inductive simultaneous transmission mode or a non-inductive simultaneous transmission mode; in the non-inductive simultaneous transmission mode, the service light and the probe light are transmitted by different optical fibers in the target optical cable.

8. A cable locating method for a communication optical cable, **characterized by** comprising:
in response to applying a preset disturbance stress to an optical cable location to be detected, dynamically detecting polarization state information of a probe light currently transmitted by a target optical cable using a polarization optical time domain reflectometer connected to the target optical cable; and
determining whether an optical cable to be identified at the optical cable location to be detected is the target optical cable according to the dynamically detected polarization state information.

9. A cable locating method for a communication optical cable, **characterized by** comprising:
in response to applying a preset disturbance stress to an optical cable location to be detected, dynamically detecting polarization state information of a probe light currently transmitted by a target optical cable using an optical digital signal processing of a coherent optical module connected to the target optical cable; and
determining whether an optical cable to be identified at the optical cable location to be detected is the target optical cable according to the dynamically detected polarization state information.

10. An electronic device, **characterized by** comprising: a memory, a processor, and a cable locating program for a communication optical cable stored in the memory and executable on the processor, wherein the cable locating program for the communication optical cable implements the cable locating method for the communication optical cable according to any one of claims 1 to 9 when executed by the processor.

11. A computer-readable storage medium, wherein the computer-readable storage medium stores a cable locating program for a communication optical cable, and the cable locating program for the communication optical cable implements the cable locating method for the communication optical cable according to any one of claims 1 to 9 when executed by a processor.
